# EUROPÄISCHE PATENTSCHRIFT

(11) **EP 0 745 829 B1**
(45) Veröffentlichungstag und Bekanntmachung des Hinweises auf die Patenterteilung: **25.08.1999**
(21) Anmeldenummer: 96108319.3
(22) Anmeldetag: 24.05.1996
(51) Int. Cl.: G01B 3/10, G01B 7/02

(54) **Messseil-Wegsensor mit schalenförmigem Gehäuse**
Measuring cable-transducer having a shell housing
Câble de mesure et capteur avec boîtier en forme de coquille

(30) Priorität: 02.06.1995 DE 19520388
(43) Veröffentlichungstag der Anmeldung: 04.12.1996
(73) Patentinhaber: ASM AUTOMATION, SENSORIK, MESSTECHNIK GMBH, D-82008 Unterhaching (DE)
(72) Erfinder: Steinich, Klaus Manfred, 85604 Poering (DE)
(74) Vertreter: Alber, Norbert, Dipl.-Ing.

(56) Entgegenhaltungen:
- DE-A- 2 128 055
- DE-A- 4 217 607
- US-A- 3 780 440
- US-A- 4 214 483
- US-A- 4 443 888
- US-A- 4 653 190

## Beschreibung

Die Erfindung betrifft einen Meßseil-Wegsensor, bei dem ein Meßseil mit dem einen Ende an einer Seiltrommel befestigt ist und mit dem anderen Ende an demjenigen Gegenstand, dessen Entfernung bezüglich des Meßseil-Wegsensors gemessen werden soll. Die Seiltrommel ist dabei in die aufgewickelte Richtung vorgespannt, z.B. im vorliegenden Fall mittels einer Flachspiralfeder ohne Windungszwischenraum. Ein an der Seiltrommel befestigter Drehwinkelgeber, beispielsweise ein Drehpotentiometer, ermittelt die jeweilige Position des am freien Ende des Meßseiles angeordneten Bauteiles vom Sensor.

Einen derartigen Gegenstand zeigt beispielsweise die DE-OS 42 17 607, jedoch mit Seiltrommel und Spiralfeder nicht koaxial, sondern nebeneinander angeordnet und mittels eines Untersetzungsgetriebes miteinander verbunden.

US-4 653 190 zeigt dagegen bereits einen Meßseil-Wegsensor, bei dem Seiltrommel und Spiralfeder koaxial und auch auf derselben Drehwelle drehfest angeordnet sind. Das Gehäuse allein des mechanischen Innenraumes dieses Sensors besteht jedoch aus einer Vielzahl von Gehäuseteilen und weist damit auch eine Vielzahl von abzudichtenden Stellen auf. Auch die Montage allein dieses mechanischen Teils des Sensors ist aus diesem Grund aufwendig, zumal dort die Meßseiltrommel mit dem Seileinlauf einerseits und die Flachspiralfeder einerseits in ein und demselben Gehäuseteil untergebracht sind, was das Aufbringen der Vorspannung auf die Flachspiralfeder bei der Montage und damit die Montage insgesamt wesentlich erschwert.

Für eine Reihe von Anwendungen ist es jedoch wichtig, daß wegen der feuchten und schmutzigen Umgebung einerseits und wegen der von passiver Beeinflussung der Elektronik andererseits ein derartiger Meßseil-Wegsensor sowohl in elektromagnetischer als auch in körperlicher Hinsicht möglichst dicht ausgebildet sein soll, und darüber hinaus die üblichen Eigenschaften wie geringe Verschleißanfälligkeit, einfache und kostengünstige Bauform und Montage etc. erfüllen muß.

Diese Aufgabe wird bei einem gattungsgemäßen Meßseil-Wegsensor durch die kennzeichnenden Merkmale des Anspruches 1 gelöst. Vorteilhafte Ausführungsformen ergeben sich aus den Unteransprüchen.

Durch die Aufnahme des mechanischen Teiles des Meßseil-Wegsensors in einstückigen, halbschalenförmigen Lagerschilden anstelle des bisher verwendeten Aufbaus aus Rohrabschnitten und stirnseitigen Endplatten und Zwischen platten ist eine verbesserte Paßgenauigkeit, Stabilität und damit eine verbesserte Dichtigkeit gegeben.

Durch das formschlüssige Ineinanderpassen in axialer und radialer Richtung der beiden Lagerschalen ist auch die Montage vor allem des mechanischen Teiles des Meßseil-Wegsensors erheblich vereinfacht:

Besonders wenn in dem einen Lagerschild die Flachspiralfeder und in dem anderen Lagerschild die Seiltrommel untergebracht werden kann, ist es möglich, zunächst die mit der tragenden Welle verbundene Flachspiralfeder in den einen Lagerschild einzusetzen, und anschließend die Welle der Seiltrommel und mit dem anderen Lagerschild zu verbinden, ggf. nach Einsetzen des Seilaufsatzes in diesen anderen Lagerschild. Nachdem nun die beiden Lagerschilde in axialer Richtung aneinandergrenzen, kann durch Verdrehen der beiden Lagerschilde um die Längsachse die Flachspiralfeder aufgezogen werden, um die notwendige Vorspannung der Seiltrommel auch im aufgewickelten Zustand des Seiles noch sicherzustellen.

Weiterhin können die Lagerschilde in Anpassung an die aufzunehmenden Bauteile mit einem optimal dimensionierten Innenraum ausgestattet werden:

Der die Flachspiralfeder aufnehmende Lagerschild hat dabei eine Innenkontur, die in etwa kreisförmig ist mit einer radialen Ausbuchtung zur Aufnahme des Befestigungsstiftes für das äußere, freie Ende der Flachspiralfeder, welcher in diesen Lagerschild eingeschraubt wird. Da sich die Flachspiralfeder radial erweitert, bis sie an einem entsprechenden Widerstand anliegt, war bei einem aus einem Vierkantrohr gefertigten Gehäuse für die Flachspiralfeder eine Begrenzung durch eine Vielzahl über den Umfang verteilter Anschlagstifte, die in die Stirnplatte eingeschraubt waren, notwendig. Durch Ausformung des Innenraumes entsprechend dem gewünschten Soll-Außenumfang der Flachspiralfeder ist hier eine optimale Anlage gegeben, ohne daß separate Teile als äußerer Anschlag montiert werden müssen.

Ebenso wird der Freiraum im Lagerschild, welcher die Seiltrommel aufnimmt, so dimensioniert, daß im wesentlichen der Querschnitt kreisförmig ist entsprechend dem kreisförmigen Umfang der Seiltrommel, und nur so wenig größer im Durchmesser, daß eine Bewicklung der Seiltrommel nur mit einer Lage des Meßseiles möglich ist. Dadurch wird ein Überwickeln des Meßseiles in mehreren Lagen vermieden, was ein ungenaues Anzeigeergebnis erbringt. Bei einem viereckigen Gehäuse wird der ansonsten kreisförmige Innenraum dieses Lagerschildes nur zu einer Ecke hin erweitert, um dort den notwendigen Freiraum für den Seileinlauf und den dafür auf das Lagerschild aufgesetzten Seilaufsatz zu schaffen.

Der Seilaufsatz kann vorzugsweise von außen an dem Lagerschild befestigt werden, so daß dessen Auswechseln ohne Zerlegen des Wegseil-Meßsensors möglich ist. In den Seilaufsatz ist ein Gleitstück eingesetzt, welches buchsenförmig von einer Bohrung, in welcher das Meßseil läuft, durchdrungen ist, und einen niedrigen Reibungskoeffizienten gegenüber dem Material des Meßseiles aufweist, also bei Stahl in der Regel aus einem Kunststoff besteht oder z.B. umgekehrt. Dabei ist das Gleitstück nach innen hin trompetenförmig erweitert, so daß eine Auslenkung des Seiles über die Längserstreckung der Seiltrommel je nach momentanem Bewicklungszustand jederzeit möglich ist.

Außen auf den Seilaufsatz kann ein Seilabstreifer zum Sauberhalten des Seiles aufgesetzt sein.

Von den beiden Lagerschilden, die den elektrischen Innenraum begrenzen, ist der eine Lagerschild mit einer koaxialen Durchgangsöffnung zum Hindurchtreten der Welle ausgestattet. Auf diesen Lagerschild kann stirnseitig außen ein topfförmiges Gehäuse aufgesetzt und befestigt werden, in welchen sich dann der elektrische Teil des Wegsensors befindet, wobei die Flachspiralfeder, die Seiltrommel und der drehbare Fortsatz des Drehwinkelgebers auf der gleichen Welle angeordnet sind. Diese ist vorzugsweise mittels Gleitlager in der durchgehenden Lageröffnung des einen Lagerschildes radial gelagert, und in einer sacklochförmigen Lageröffnung des anderen Lagerschildes sowohl radial als auch axial mittels einer Gleitscheibe am Boden dieser sacklochförmigen Lageröffnung.

Die Durchgangsöffnung wird weiterhin über eine V-Dichtung gegen Feuchtigkeit und Staub abgedichtet, so daß die trotz der kleinen Öffnung am Seileintritt in den mechanischen Teil des Sensors eindringenden Verunreinigungen nicht in den elektrischen Teil des Sensors gelangen können. Die V-Dichtung liegt in einer ringförmigen Nut, die eine Erweiterung der durchgehenden Lageröffnung im einen Lagerschild darstellt, mit in die Ecke der Nut weisendem freien Dichtungsschenkel an.

Die Welle ragt nur relativ wenig in den elektrischen Innenraum des Sensors hinein. In eine stirnseitige Bohrung der Welle ist der Drehzapfen des Drehwinkelgebers eingesteckt und dort mittels Klemmschraube fixiert. Da der eingesteckte Drehzapfen des Drehwinkelgebers mit diesem meist nicht 100%-ig fluchtet, würde eine Befestigung des Drehwinkelgebers am umgebenden Gehäuse einen Winkelversatz zwischen dem Drehzapfen des Drehwinkelgebers und der die mechanischen Teile des Sensors tragenden Welle erfordern, was nur mit einer aufwendigen Bauform zu realisieren ist.

Um dies zu vermeiden, wird der Drehzapfen praktisch spielfrei, also so fest wie möglich, mit der Welle verbunden, und der Drehwinkelgeber frei auskragend belassen.

Da jedoch ein Mitdrehen des Drehwinkelgebers zu vermeiden ist, wird unter Zulassung leichter Unwuchten des Drehwinkelgebers dieser lediglich mit einer radial abstehenden Gabel aus einem elastischen, z.B. Blechmaterial fest verbunden. Das abstehende Ende dieser Blechgabel ist formschlüssig mit einem gehäusefesten Punkt so verbunden, daß ein Drehen der Blechgabel und damit des Drehwinkelgebers um dessen Drehachse möglichst spielfrei vermieden wird, jedoch die aufgrund der Unwucht des Drehwinkelgebers stattfindenden Bewegungen auch der Blechgabel durch das in Längsrichtung der Blechgabel vorhandene Spiel aufgenommen wird.

Zu diesem Zweck ist auch eine möglichst große Wirklänge der Blechgabel erwünscht, weswegen diese bei einem mittig koaxial in einem etwa viereckigen Gehäuse befestigten Drehwinkelgeber vorzugsweise in eine Ecke des Gehäuses weist.

Vorzugsweise wird als gehäusefester Punkt dabei ein unrunder, parallel zur Achse des Drehwinkelgebers verlaufender, Bolzen verwendet, welcher von dem gabelförmigen Ende der Blechgabel umgriffen wird. Nach dem Zusammenbau kann durch Drehen des unrunden Bolzens erreicht werden, daß dieser an beiden Flanken der Blechgabel mit möglichst geringem Spiel, jedoch ohne Druck anliegt und damit eine spielfreie Verbindung zwischen dem unrunden Stift und der Blechgabel in Umfangsrichtung des Drehwinkelgebers erzielt wird. Vorzugsweise wird hierfür ein Sechskantbolzen verwendet, wobei dieser Bolzen gleichzeitig der Verschraubung des topfförmigen Elektrogehäuses mit dem angrenzenden Lagerschild dienen kann, was zu einer Reduzierung der Teileanzahl beiträgt.

Um den Drehwinkelgeber ist eine Platine, die die elektronischen Bauteile des Sensors trägt, schwimmend angeordnet. Die elektrische Verbindung des Sensors mit den hiermit zusammenwirkenden Bauteilen erfolgt über einen vorzugsweise in die Stirnseite des topfförmigen Gehäuses eingelassenen Steckerteil.

Um die spezifische Formgebung vor allem der Lagerschilde zu gewährleisten, sind wenigstens diese Lagerschilde im Gußverfahren oder Fließpreßverfahren hergestellt, vorzugsweise aus Leichtmetall, wie etwa Aluminium oder bei Druckguß aus Zink.

Bei Verwendung nichtleitender Materialien sind wenigstens das Elektrogehäuse und der angrenzende Lagerschild mit einer leitfähigen Oberflächenbeschichtung auszustatten, um eine aktive oder passive elektromagnetische Beeinflussung zumindest des elektrischen Teils des Sensors zu vermeiden. Auch bei Herstellung aus leitenden Materialien wie etwas Aluminium kann es notwendig sein, daß Aluminium, welches im unbehandelten Zustand an seiner Oberfläche sehr schnell korrodieren und damit nichtleitend werden würde, mit einer leitfähigen Oberflächenbeschichtung, etwa mittels Chromatieren, Aludinieren oder Cadmieren, aus dem gleichen Grund auszustatten. Auch sind hierfür entsprechend große Wanddicken vorzusehen, und bei unrundem, vorzugsweise quadratischem, Außenquerschnitt vor allem in den Eckbereichen die Wandstärken so groß wie möglich zu wählen, wodurch bereits über einen Großteil des Umfanges eine optimale Isolierung gegen elektromagnetische Strahlung gegeben ist.

An den Fugen des Sensor-Gehäuses ist dabei neben der Abdichtung gegen Staub und Feuchtigkeit mittels Gummidichtungen etc. auch eine ausreichend große axiale Überlappung der einzelnen Teile des Gehäuses vorzusehen, um hierdurch wiederum die elektromagnetische Dichtigkeit zu erhöhen.

Eine Ausführungsform gemäß der Erfindung ist im folgenden anhand der Figuren beispielhaft näher beschrieben. Es zeigen:
- Fig. 1:: einen Meßseil-Wegsensor im Längsschnitt,
- Fig. 2:: eine Aufsicht auf den Lagerschild 13 von der Distanzscheibe 24 aus und
- Fig. 3:: eine Aufsicht auf den Lagerschild 14 von der Distanzscheibe 24 aus.

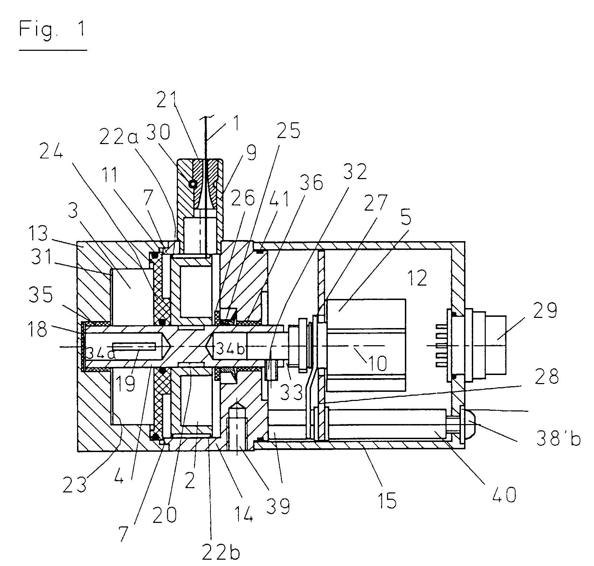

Fig. 1 zeigt die in Längsrichtung 10 verlaufende Welle 4, die den Lagerschild 14 axial durchläuft und dort über das Radiallager 36 gelagert ist, während das linke Ende über ein Radiallager 35 und eine axiale Gleitscheibe 18 in einer topfförmigen Lagervertiefung 16 der Bodenfläche 23 des Lagerschildes 13 gelagert ist. Zwischen den Lagerschilden 13 und 14 wird damit der mechanische Innenraum 11 gebildet, in dem die Seiltrommel 2 und die Flachspiralfeder 3 sowie weitere Bauteile aufgenommen werden. Die Welle 4 ragt in Fig. 1 mit ihrem rechten Ende frei endend in den elektrischen Innenraum 12 hinein, der durch Überstülpen eines topfförmigen Elektrogehäuses 15 mit der offenen Seite auf von der Welle 4 durchdrungenen Lagerschild 14 entsteht.

Die Welle 4 ist dabei drehfest einerseits mit der Seiltrommel 2 verbunden, indem in diesem Bereich in einer ringförmigen Nut des Außenumfanges der Welle 4 ein Toleranzring 20 liegt, über welchen die Seiltrommel 2 mit ihrem entsprechenden Innendurchmesser in axialer Richtung aufgeschoben werden kann und dann kraftschlüssig mit der Welle 4 verbunden ist. Zu diesem Zweck weist der in den Figuren nicht im Detail dargestellte Toleranzring 20, der an einer Stelle des Umfanges durch einen Schlitz geöffnet ist, in der Querschnittsdarstellung eine etwa wellenförmige Kontur auf und besteht aus einem elastischen Material wie etwa Blech, so daß durch das Aufschieben des Innendurchmessers der Seiltrommel 2, welcher kleiner ist als der Außendurchmesser des Toleranzringes 20 im Ruhezustand, diese Wellenkontur etwas flachgedrückt wird und damit den Kraftschluß erzeugt.

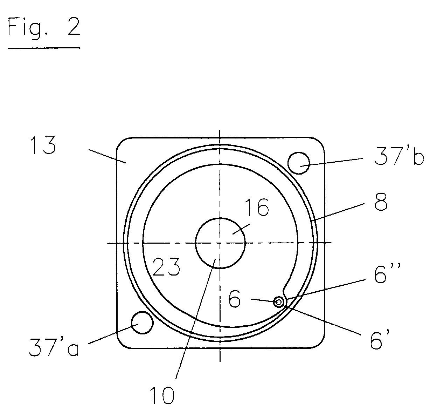

Mit der Welle 4 ebenfalls drehfest verbunden ist die Flachspiralfeder 3, deren inneres Ende durch Einstecken einer Kröpfung der Flachspiralfeder 3 in einen radialen Schlitz 19 der Windung der Welle 4 mit dieser verbunden ist. Das äußere freie Ende der Flachspiralfeder 3 ist mit einem Fixierungsstift 6 fest verbunden, welcher parallel zur Längsrichtung 10 in eine entsprechende Bohrung 6' in der Bodenfläche 23 des Lagerschildes 13 verschraubt wird, wie besser in Fig. 2 zu erkennen.

Dadurch wird die Welle 4 - nach Aufziehen der Flachspiralfeder 3, die in der Regel keinen Windungszwischenraum aufweist - und mit ihr die Seiltrommel 2 in der aufwickelnden Drehrichtung des Meßseiles 1 vorgespannt.

Wie in der Aufsicht der Fig. 2 zu erkennen, ist die Ausnehmung für die Flachspiralfeder 3 in etwa kreisförmig bis auf eine Ausbuchtung 6'', von der aus die Wandung spiralförmig in den ansonsten kreisförmigen Innendurchmesser hineinverläuft. Diese Ausnehmung 6'' ist in radialer Richtung so groß, daß darin das Unterbringen des Fixierungsstiftes 6 erfolgen kann mit der Folge, daß die Flachspiralfeder 3 ansonsten über den gesamten Innenumfang des Innenraumes am Lagerschild 13 anliegt, ohne daß hierfür besondere Anschläge montiert werden müssen.

Wie Fig. 1 ferner zeigt, steht das Radiallager 35, welches ebenso wie das Radiallager 36 ein Gleitlager ist, axial etwas über die Bodenfläche 23 vor, um die Flachspiralfeder 3 in einem Abstand 31 zur Bodenfläche 23 zu halten. Auf der anderen Stirnseite der Flachspiralfeder 3 schließt sich an diese eine Distanzscheibe 24 an, deren Außendurchmesser größer ist als der Außendurchmesser der Bodenfläche 23 und damit der Flachspiralfeder 3. Diese Distanzscheibe 24 stellt den richtigen axialen Abstand zwischen der Flachspiralfeder 3 und der sich koaxial anschließenden Seiltrommel 2 her, und weist zu diesem Zweck eine möglichst geringe stirnseitige Anlagefläche gegenüber der rotierenden Seiltrommel 2 auf, um hier die Gleitreibung möglichst gering zu halten. Weiterhin ist die Distanzscheibe 24 vorzugsweise sowohl am Außenumfang gegenüber dem Gehäuse, als auch am Innenumfang gegenüber der sie tragenden Welle 4 z.B. mittels eingelegter O-Ringe in entsprechende Ringnuten der Mantelflächen der Distanzscheibe 24 abgedichtet.

Die Seiltrommel 2 weist in ihrem Umfangsbereich eine ringförmige Nut auf, deren Tiefe nur geringfügig größer ist als die Dicke des Meßseiles 1, und die sich über annähernd die gesamte axiale Erstreckung der Seiltrommel 2 erstreckt, so daß von dieser am Außendurchmesser nur die stirnseitigen Flanken 22a, 22b stehenbleiben. Diese reichen radial nach außen bis nahe an den entsprechenden Innendurchmesser in dem Lagerschild 14 heran. Dadurch ist sichergestellt, daß die Aufwicklung des Meßseiles 1, welches zu Beginn der Aufwicklung fluchtend mit der Öffnung für das Meßseil an der einen Flanke 22b beginnt, sich in einer einzigen Wicklungslage bis zur gegenüberliegenden Flanke 22a hin fortsetzt und ein Überwickeln in einer zweiten Lage verhindert wird.

Zu diesem Zweck wird das Meßseil 1 nicht direkt in der Außenwandung des Lagerschildes 14 geführt, sondern durch die sich nach innen trompetenförmig erweiternde Öffnung einer buchsenförmigen Gleitstückes 21, dessen Material zum Material des Meßseiles 1 einen optimal niedrigen Reibungskoeffizienten aufweist, und welches wiederum in das äußere Ende einer Durchgangsöffnung eines Seilaufsatzes 9 eingesetzt ist und dort mittels einer Klemmschraube 30, welcher radial vom Lagerschild 14 nach außen abstrebt, oder mittels Einkleben fixierbar ist.

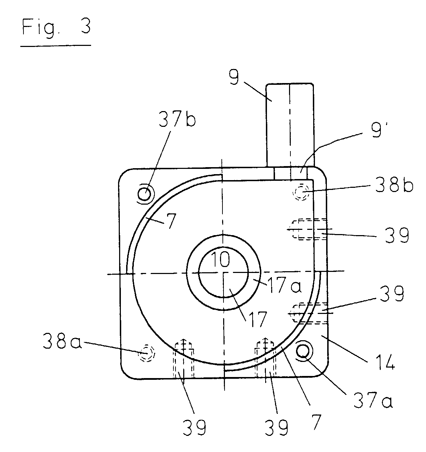

Wie besser in der Aufsicht der Fig. 3 auf das Lagerschild 14 zu erkennen, weist dieser einen Innendurchmesser auf, der über etwa 270° kreisförmig ist und nur zu einer Ecke hin die Außenkontur des Lagerschildes 14, in der Regel einem Quadrat, entspricht. In dieser in die Ecke hineinreichenden Erweiterung ist der Seilaufsatz 9 möglichst weit in der Ecke eingesetzt, um das Meßseil 1 möglichst tangential auf die Seiltrommel 2 aufzuleiten, welche den Innenraum des Lagerschildes 14 weitestgehend ausfüllt.

Der Seilaufsatz kann dabei entweder formschlüssig axial in die Wandung des Lagerschildes 14 von dessen freier Seite her einschiebbar sein oder auch in Längsrichtung des Seiles von außen her in den Lagerschild 14 einsetzbar gestaltet sein, was das Auswechseln sowohl des Seilaufsatzes 9, als auch des Gleitstückes 31 im Seilaufsatz 9 erleichtert.

Wie Fig. 3 ferner zeigt, sind in den vier Ecken des Lagerschildes 14 zu den beiden Stirnseiten hin jeweils zwei, in jeweils gegenüberliegenden Ecken angeordnete Verschraubungen 37a, 37b bzw. 38a, 38b angeordnet. Die Verschraubungen 37a, 37b dienen dabei der Verschraubung mit dem stirnseitig geschlossenen Lagerschild 13, und befinden sich in den aus massivem Material bestehenden beiden gegenüberliegenden Ecken des Lagerschildes 14.

In den beiden anderen Ecken befinden sich von der anderen Stirnseite her analoge Gewindesacklöcher als Verschraubung 38b, die der Verschraubung des Lagerschildes 14 mit dem Elektrogehäuse 15 dienen. Dabei befindet sich das eine Gewindeloch 38b in der nicht massiv ausgebildeten Ecke des Lagerschildes 14, besitzt jedoch nur eine solche Tiefe, daß der Lagerschild 14 hiervon nicht durchdrungen wird.

Ferner befinden sich in dem massiven Boden des Lagerschildes 14 weiterhin in mindestens zwei benachbarten Außenflächen sacklochförmige Gewindebohrungen 39, die der Verschraubung des gesamten Sensors an einem ihn tragenden Bauteil dienen.

In Fig. 3 sind ferner die über zwei Sektoren von jeweils 45° ausgebildeten Leitbögen 7 zu erkennen, die gegenüber der in Fig. 3 sichtbaren Stirnfläche des Lagerschildes 14 vorstehen und sich in zwei gegenüberliegenden Sektoren entlang der massiv ausgebildeten Ecken und damit im Bereich der Verschraubung 37a, 37b befinden. In der gegenüberliegenden Stirnfläche des Lagerschildes 13 ist eine entsprechende, jedoch ringförmig umlaufende, Ausnehmung 8 vorgesehen, so daß die beiden Lagerschilde 13, 14 axial ineinandergesetzt und dadurch radial formschlüssig miteinander verbunden sind, und dennoch in diesem Zustand um die Längsrichtung 10 gegeneinander verdreht werden können.

Dies ermöglicht ein Vorgehen bei der Montage des mechanischen Teiles, und dabei vor allem der bei der Montage gefährlichen Flachspiralfeder 3, deren Eigenspannung so hoch ist, daß sie beim Öffnen des dicht gewickelten Zustandes wegen ihrer scharfen Kanten eine erhebliche Gefahrenquelle darstellt:

Nach Einsetzen der Gleitscheibe 18 in die Lagervertiefung 16 des Lagerschildes 13 sowie des Radiallagers 35 wird die Flachspiralfeder 3 mit der Kröpfung ihres innenliegenden Endes durch Einschieben in den Schlitz 19 der Wandung der Welle 4 in diesem Bereich drehfest mit dieser verbunden, und das stirnseitige Ende der Welle 4 in die Lagervertiefung 16 des Lagerschildes 13 eingesetzt und das äußere freie Ende der Flachspiralfeder 3 durch Verschrauben des Fixierungsstiftes 6 in der entsprechenden Gewindebohrung 6' im Boden 23 mit dem Lagerschild 13 fest verbunden. Durch anschließendes Aufschieben der Distanzscheibe 24 und des Toleranzringes 20 in die entsprechende Ringnut der Welle 4 wird die Seiltrommel 2 auf den Toleranzring 20 axial vom freien Ende her aufgeschoben, und anschließend auch die Anlaufscheibe 26.

Dadurch sind alle beweglichen Teile bereits in radialer Richtung fest über die Welle 4 miteinander verbunden, so daß nun das mit dem radial wegstehenden Seilaufsatz 9 versehene Lagerschild 14 mit eingesetzter V-Dichtung 25 und eingesetztem Radiallager 36 auf das freie Ende der Welle 4 aufgeschoben wird, bis die Lagerschilde 13 und 14 über die Gleitbögen 7 und die entsprechende Ausnehmung 8 miteinander in engem Kontakt stehen.

Nunmehr wird durch relative Verdrehung der beiden Lagerschilde 13 und 14 gegeneinander die Flachspiralfeder 3 bei aufgewickeltem Meßseil 1 durch mehrere Umdrehungen soweit vorgespannt, daß auch im vollständig aufgewickelten Zustand des Meßseiles 1 noch eine ausreichende Vorspannung der Seiltrommel 2 in die aufgewickelte Richtung vorhanden ist.

Die V-Dichtung 25 liegt dabei mit ihrer schräg nach außen verlaufenden, ringförmigen Kante an der Stirnfläche einer Erweiterung 17a der axial durchgehenden Lageröffnung 17 auf der Seite des mechanischen Innenraumes 11 an. Der Außen umfang der Erweiterung 17a ist dabei in radialer Richtung nur sehr wenig vom Außenumfang der V-Dichtung 25 entfernt, so daß durch diesen geringen Abstand eine zusätzliche Labyrinthwirkung für diese Dichtung entsteht. Die Anlaufscheibe 26 hat dabei einen Außendurchmesser, der kleiner ist als der Außendurchmesser der Erweiterung 17a, so daß die Anlaufscheibe 26 an der Dichtung 25 und nicht an der Bodenfläche des Lagerschildes 14 anliegt. Distanzscheibe 24, Anlaufscheibe 26 und die Dichtung 25 besitzen einen Innendurchmesser, der dem Außendurchmesser der Welle 4 entspricht.

Wie Fig. 1 ferner zeigt, ist die Welle 4 als massive Welle von beiden Stirnseiten her mit axialen Bohrungen versehen, die bis an die stirnseitigen Endbereiche der Seiltrommel 2 heranreichen, so daß bei minimalem Gewicht im Bereich der Seiltrommel 2 eine optimale Stabilität in radialer Richtung gegeben ist.

In die rechte stirnseitige Öffnung ist der Drehwinkelgeber 5 mit seinem Drehzapfen 33 eingesteckt und mittels einer querverlaufenden Klemmverschraubung 32 kraftschlüssig verklemmt. Der Drehwinkelgeber 12 befindet sich damit frei auskragend im elektrischen Innenraum 12, um eine Unwucht des Drehzapfens 33 zum eigentlichen Drehwinkelgeber 5 ausgleichen zu können. Lose um den Drehwinkelgeber 5 herum ist auch eine Platine 28, die quer zur Längsrichtung 10 im elektrischen Innenraum 12 verläuft, ebenfalls nicht mitdrehend angeordnet und mittels der Verschraubung 38b mit dem Lagerschild 24 verbunden. Die Platine 28 kann dabei wie dargestellt auf der dem Lagerschild 14 zugewandten Seite des Drehwinkelgebers, aber auch auf der von diesem abgewandten Seite, innerhalb des elektrischen Innenraumes 12 angeordnet sein.

Als Sicherung gegen ein Mitdrehen des Drehwinkelgebers 12 dient eine von diesem radial abstehende und mit ihm drehfest verbundene Blechgabel 27, deren gabelförmiges freies Ende einen Sechskantbolzen 40 umgreift. Dieser Sechskantbolzen 40 ist Bestandteil der Verschraubung 38 zwischen dem Elektrogehäuse 15 und dem Lagerschild 14, indem der Sechskantbolzen 40 auf der einen Seite einen stirnseitig vorstehenden Gewindebolzen aufweist, mit dem er in den Lagerschild 14 eingeschraubt ist, und auf der gegenüberliegenden Seite ein entsprechendes Innengewinde, in welches das den Boden des Elektrogehäuses 15 durchdringende Schraube 38b einschraubbar ist. Mit Hilfe dieser Schraube 38'b kann somit - über eine zwischengelegte O-Ringdichtung 41 - nicht nur die Axialverschraubung zwischen Elektrogehäuse 15 und Lagerschild 14 vorgenommen werden, sondern durch Verdrehen des Sechskantbolzens 40 vor dem Aufsetzen des Elektrogehäuses 15 dessen Anlage an beiden Innenflanken des gabelförmigen Endes der Blechgabel 27 möglichst spielfrei eingestellt werden, so daß eine Radialbewegung zwischen der Blechgabel 27 und dem Bolzen zwar möglich ist, wie sie bei Taumelbewegungen des Drehwinkelgebers 12 entsteht, jedoch keine Verdrehung des Drehwinkelgebers.

Um eine möglichst geringe Anlagefläche und damit eine Messerschneiden-artige Lagerung zwischen dem Sechskantbolzen 40 und der Blechgabel 27 zu erreichen, besteht die Blechgabel 27 aus einem höchstens 1 mm dünnen Blechmaterial, welches zusätzlich geätzt wird, wodurch sich an den Umfangskanten, vor allem in dem gegen den Sechskantbolzen 40 gerichteten Bereich, eine spitze Schneide ausbildet, die ohne das Ätzen durch mechanische Bearbeitung und damit wesentlich arbeitsaufwendiger hergestellt werden müßte.

## Patentansprüche

1. Meßseil-Wegsensor mit
- einem Meßseil (1),
- einer Seiltrommel (2) zum Aufwickeln des Meßseiles (1),
- einer mit der Seiltrommel (2) koaxial auf der gleichen Welle (4) drehfest angeordneten Flachspiralfeder (3),
- einem mit der Welle (4) verbundenen Drehwinkelgeber (5) und
- einem den Wegsensor umgebenden bis auf den Meßseil-Einlauf abgedichteten Gehäuse mit in Längsrichtung (10) der Welle (4) axial beabstandeten und abgetrennten wenigstens einem mechanischen Innenraum (11) und wenigstens einem elektrischen Innenraum (12), so daß im mechanischen Innenraum (11) die Seiltrommel (2) und die Flachspiralfeder (3) untergebracht sind sowie im elektrischen Innenraum (12) der Drehwinkelgeber (5) und die zugehörige Elektronik,
**dadurch gekennzeichnet daß**
a) das Gehäuse des mechanischen Innenraumes (11) durch zwei schalenförmige, jeweils einstückige, Lagerschilde (13, 14) gebildet wird,
b) in dem einen Lagerschild (13) die Flachspiralfeder untergebracht ist und in dem anderen Lagerschild (14) die Seiltrommel und der Meßseil-Einlauf untergebracht ist, und
c) die Lagerschilde (13, 14) formschlüssig ineinander steckbar und dadurch um die Längsachse (10) der Flachspiralfeder (3) gegeneinander verdrehbar sind, wodurch die Flachspiralfeder (3) aufgezogen wird.

2. Meßseil-Wegsensor nach Anspruch 1,
**dadurch gekennzeichnet, daß**
die Lagerschilde (13, 14) und/oder das Elektro-Gehäuse (15) im Querschnitt außen unrund, vorzugsweise quadratisch, ausgebildet sind.

3. Meßseil-Wegsensor nach einem der vorhergehenden Ansprüche,
**dadurch gekennzeichnet, daß**
in dem Lagerschild (13) bzw. (14) für die Flachspiralfeder (3) der Umfang der Ausnehmung (8) für die Flachspiralfeder (3) etwas größer ist als deren Außenumfang bei voll auf der Seiltrommel (2) aufgewickeltem Meßseil (1) und die Umfangskontur der Ausnehmung (8) in einem Umfangsbereich eine radial nach außen gerichtete Erweiterung (6") zur Aufnahme des Fixierungsstiftes (6) für das äußere Ende der Flachspiralfeder (3) aufweist.

4. Meßseil-Wegsensor nach einem der vorhergehenden Ansprüche,
**dadurch gekennzeichnet, daß**
von den Lagerschilden (13, 14) der eine Lagerschild z.B. (13) das stirnseitige Ende des Wegsensors bildet, und in dessen Inneren in einer sacklochförmigen Lagervertiefung (16) die eine Lagerung der Welle (4) angeordnet ist und in einer Durchgangsöffnung des anderen Lagerschildes z.B. (14) in einer durchgehenden Lageröffnung (17) die andere Lagerung der Welle (4) angeordnet ist.

5. Meßseil-Wegsensor nach einem der vorhergehenden Ansprüche,
**dadurch gekennzeichnet, daß**
die Welle (4) wenigstens in ihren stirnseitigen Endbereichen als Hohlwelle ausgebildet ist und insbesondere die dadurch entstehende Wandung von einem längsverlaufenden Schlitz (19) durchdrungen wird.

6. Meßseil-Wegsensor nach einem der vorhergehenden Ansprüche,
**dadurch gekennzeichnet, daß**
das Elektrogehäuse (15) und wenigstens der daran angrenzende der beiden Lagerschilde (13, 14) wenigstens eine leitfähige Oberfläche aufweisen.

7. Meßseil-Wegsensor nach einem der vorhergehenden Ansprüche,
**dadurch gekennzeichnet, daß**
das Elektrogehäuse (15) und wenigstens der daran angrenzende der beiden Lagerschilde (13, 14) eine so große durchschnittliche Wandstärke sowie in axialer Richtung eine so große gegenseitige Überlappung aufweisen, daß hierdurch ein ausreichender Schutz gegen hindurchtretende elektromagnetische Strahlung erzielt wird.

8. Meßseil-Wegsensor nach einem der vorhergehenden Ansprüche,
**dadurch gekennzeichnet, daß**
der Seilaufsatz (9) in dem ihn tragenden Lagerschild (z.B. 14) montiert bzw. demontiert werden kann, ohne Trennung der Lagerschilde (13) und (14) bzw. dem Elektrogehäuse (15) voneinander.

9. Meßseil-Wegsensor nach einem der vorhergehenden Ansprüche,
**dadurch gekennzeichnet, daß**
die Flachspiralfeder (3) von der Bodenfläche (23) des sie tragenden Lagerschildes (13) bzw. (14) im Abstand gehalten wird durch leicht axiales Vorstehen des radialen Gleitlagers der Welle (4) über die Bodenfläche (23).

10. Meßseil-Wegsensor nach einem der vorhergehenden Ansprüche,
**dadurch gekennzeichnet, daß**
der Außenumfang der Welle (4) zylindrisch ist bis auf die Vertiefung zur Aufnahme des Toleranzringes (20) und die Seiltrommel (2) sowie Flachspiralfeder (3) durch eine dazwischen angeordnete Distanzscheibe (24) im richtigen axialen Abstand zueiander gehalten werden.

11. Meßseil-Wegsensor nach Anspruch 10,
**dadurch gekennzeichnet, daß**
die Distanzscheibe (24) auf der der Seiltrommel (2) zugewandten Stirnseite eine möglichst geringe Anlagefläche aufweist.

12. Meßseil-Wegsensor nach Anspruch 10,
**dadurch gekennzeichnet, daß**
die Distanzscheibe (24) an ihrem Außenumfang gegenüber dem umgebenden Gehäuse des mechanischen Innenraumes (11) abgedichtet ist.

13. Meßseil-Wegsensor nach einem der vorhergehenden Ansprüche,
**dadurch gekennzeichnet, daß**
die Abdichtung des mechanischen Innenraumes (11) gegenüber dem elektrischen Innenraum (12) mittels einer auf der Seite des mechanischen Innenraumes (11) in einer ringförmigen radialen Erweiterung (17a) der Lageröffnung (17) angeordnete V-Dichtring (25) erfolgt, deren frei endende Ringkante in die Ecke der ringförmigen Erweiterung (17a) weist, und an der Stirnfläche der Erweiterung (17a) anliegt, jedoch in möglichst geringem Abstand vor der radialen Innen-Umfangsfläche der Erweiterung (17a) endet.

14. Meßseil-Wegsensor nach einem der vorhergehenden Ansprüche,
**dadurch gekennzeichnet, daß**
die Seiltrommel (2) mittels einer ringförmigen Anlaufscheibe (26), deren Außenumfang kleiner ist als der Außenumfang der Erweiterung (17a), im Abstand zur V-Dichtung (25) gehalten wird.

15. Meßseil-Wegsensor nach einem der vorhergehenden Ansprüche,
**dadurch gekennzeichnet, daß**
die Verschraubung der Lagerschilde (13, 14) miteinander über zwei axial gerichtete Schrauben in gegenüberliegenden Ecken geschieht, während die Verschraubung des Elektrogehäuses (15) mit dem an sie angrenzenden Lagerschild z.B. (14) über die Verschraubung in den beiden anderen Ecken geschieht.

16. Meßseil-Wegsensor nach einem der vorhergehenden Ansprüche,
**dadurch gekennzeichnet, daß**
- eine der Verbindungsschrauben (38'b) zwischen dem Elektrogehäuse (15) und dem daran angrenzenden Lagerschild (14) im Innenraum des Elektrogehäuses (15) verläuft und wenigstens über einen Teil ihrer axialen Länge einen unrunden Außenquerschnitt (40) aufweist und in diesem Bereich von dem gabelförmigen Ende einer drehfest mit dem Winkelgeber (5) verbundenen, von diesem radial abstrebenden Blechgabel (27) umgriffen wird, und
- die Blechgabel (27) wenigstens an den nach innen, in ihre Aussparung am gabelförmigen Ende auf den unrunden Außenquerschnitt (4) der Verbindungsschraube (38'b) hinweisenden Kanten eine messerartige Schneide ausgebildet ist.

17. Meßseil-Wegsensor nach einem der vorhergehenden Ansprüche,
**dadurch gekennzeichnet, daß**
- die Verbindungsschrauben (38'b) aus wenigstens einem ersten Gewindebolzen (38'b1) mit unrundem Außenquerschnitt (40) besteht, welcher mit seinem koaxialen Gewindefortsatz in den Lagerschild (14) eingeschraubt ist, und in dessen auf der gegenüberliegenden Stirnseite angeordneter koaxialer Gewindebohrung eine Kopfschraube (38'b2) zur Halterung des Elektrogehäuses (15) am Gewindebolzen (38'b1) eingeschraubt ist, und
- im montierten Zustand der von der Blechgabel (27) umgriffene Außenquerschnitt (40) der Verbindungsschraube (38'b) soweit verdreht ist, daß er mit seinen Außenflächen im geringstmöglichen Abstand zu den gegen den Außenquerschnitt (40) gerichteten Kanten der Blechgabel (27) geraten, ohne zwischen diesen verspannt zu sein.

18. Verfahren zur Montage des mechanischen Teiles eines Meßseil-Wegsensors, insbesondere nach einem der vorhergehenden Ansprüche, wobei der Meßseil-Wegsensor folgendes umfaßt:
- ein Meßseil (1),
- eine Seiltrommel (2) zum Aufwickeln des Meßseiles (1).
- eine mit der Seiltrommel (2) koaxial auf der gleichen Welle (4) drehfest angeordnete Flachspiralfeder (3),
- einen mit der Welle (4) verbundenen Drehwinkelgeber (5) und
- ein den Wegsensor umgebenden bis auf den Meßseil-Einlauf abgedichteten Gehäuse mit in Längsrichtung (10) der Welle (4) axial beabstandeten und abgetrennten wenigstens einen mechanischen Innenraum (11) und wenigstens einen elektrischen Innenraum (12), so daß im mechanischen Innenraum (11) die Seiltrommel (2) und die Flachspiralfeder (3) untergebracht sind sowie im elektrischen Innenraum (12) der Drehwinkelgeber (5) und die zugehörige Elektronik, wobei
- das Gehäuse des mechanischen Innenraumes (11) durch zwei schalenförmige, jeweils einstückige, Lagerschilde (13, 14) gebildet wird,
- in dem einen Lagerschild (13) die Flachspiralfeder untergebracht ist und in dem anderen Lagerschild (14) die Seiltrommel und der Meßseil-Einlauf untergebracht ist, und
- die Lagerschilde (13, 14) formschlüssig ineinander steckbar und dadurch um die Längsachse (10) der Flachspiralfeder (3) gegeneinander verdrehbar sind,
**dadurch gekennzeichnet, daß**
- zunächst die mit der Welle (4) verbundene Flachspiralfeder (3) in den einen Lagerschild (13) eingesetzt wird,
- anschließend die Welle (4) mit der Seiltrommel (2) und dem anderen Lagerschild (14) verbunden wird, und
- nach Aneinandergrenzen der beiden Lagerschilde (13, 14) in axialer Richtung durch Verdrehen der beiden Lagerschilde (13, 14) um die Längsachse der Welle (4) die Flachspiralfeder (3) aufgezogen wird, und
- zuletzt die Lagerschilde (13, 14) gegeneinander fixiert werden.

19. Verfahren nach Anspruch 18,
**dadurch gekennzeichnet, daß**
beim Verbinden der Seiltrommel (2) mit dem anderen Lagerschild (14) ein Seilaufsatz (9) im Lagerschild (14) eingesetzt wird.

## Claims

1. A measuring cable travel sensor comprising
- a measuring cable (1),
- a cable drum (2) for winding on the measuring cable (1),
- a flat spiral spring (3) which is arranged coaxially with the cable drum (2) non-rotatably on the same shaft (4),
- a rotary angle transducer (5) connected to the shaft (4), and
- a housing which surrounds the travel sensor and which is sealed except for the measuring cable entry, with at least one mechanical internal space (11) and at least one electrical internal space (12) which are separated and spaced axially in the longitudinal direction (10) of the shaft (4) so that the cable drum (2) and the flat spiral spring (3) are disposed in the mechanical internal space (11) and the rotary angle transducer (5) and the associated electronics are disposed in the electrical internal space (12),
characterised in that
a) the housing of the mechanical internal space (11) is formed by two shell-shaped mounting cases (13, 14) which are each in one piece,
b) the flat spiral spring is disposed in the one mounting case (13) and the cable drum and the measuring cable entry are disposed in the other mounting case (14), and
c) the mounting cases (13, 14) can be fitted one into the other in positively locking relationship and are thereby rotatable relative to each other about the longitudinal axis (10) of the flat spiral spring (3) whereby the flat spiral spring (3) is wound up.

2. A measuring cable travel sensor according to claim 1 characterised in that the mounting cases (13, 14) and/or the electrical housing (15) are in cross-section externally non-round, preferably square.

3. A measuring cable travel sensor according to one of the preceding claims characterised in that in the mounting case (13) or (14) for the flat spiral spring (3) the periphery of the recess (8) for the flat spiral spring (3) is somewhat larger than the outside periphery thereof when the measuring cable (1) is fully wound on the cable drum (2) and the peripheral contour of the recess (8) in a peripheral region has a radially outwardly directed enlargement (6") to receive the fixing pin (6) for the outer end of the flat spiral spring (3).

4. A measuring cable travel sensor according to one of the preceding claims characterised in that of the mounting cases (13, 14) the one mounting case for example (13) forms the front end of the travel sensor and arranged in the interior thereof in a mounting recess (16) in the form of a blind hole is the one mounting arrangement of the shaft (4) and arranged in a through opening of the other mounting case, for example (14), in a mounting opening (17) extending therethrough, is the other mounting arrangement of the shaft (4).

5. A measuring cable travel sensor according to one of the preceding claims characterised in that the shaft (4) is in the form of a hollow shaft at least in its end regions and in particular the wall formed thereby has a longitudinally extending slot (19) passing therethrough.

6. A measuring cable travel sensor according to one of the preceding claims characterised in that the electric housing (15) and at least the adjoining one of the two mounting cases (13, 14) has at least a conductive surface.

7. A measuring cable travel sensor according to one of the preceding claims characterised in that the electric housing (15) and at least the adjoining one of the two mounting cases (13, 14) have such a large average wall thickness and in the axial direction such a large mutual overlap that adequate protection is afforded thereby in relation to electromagnetic radiation passing therethrough.

8. A measuring cable travel sensor according to one of the preceding claims characterised in that the cable guide fitment (9) can be fitted in or removed from the mounting case (for example 14) carrying it without separating the mounting cases (13) and (14) or the electric housing (15) from each other.

9. A measuring cable travel sensor according to one of the preceding claims characterised in that the flat spiral spring (3) is held at a spacing from the bottom surface (23) of the mounting case (13) or (14) carrying it by the radial plain bearing of the shaft (4) axially projecting slightly beyond the bottom surface (23).

10. A measuring cable travel sensor according to one of the preceding claims characterised in that the outside periphery of the shaft (4) is cylindrical except for the recess for receiving the tolerance ring (20) and the cable drum (2) and the flat spiral spring (3) are held at the correct axial spacing relative to each other by a spacer disc (24) disposed therebetween.

11. A measuring cable travel sensor according to claim 10 characterised in that on the face towards the cable drum (2) the spacer disc (24) has the smallest possible contact area.

12. A measuring cable travel sensor according to claim 10 characterised in that the spacer disc (24) is sealed off at its outside periphery with respect to the surrounding housing of the mechanical internal space (11).

13. A measuring cable travel sensor according to one of the preceding claims characterised in that sealing integrity of the mechanical internal space (11) with respect to the electrical internal space (12) is effected by means of a V-shaped sealing ring (25) which is arranged on the side of the mechanical internal space (11) in an annular radial enlargement (17a) of the mounting opening (17) and whose freely terminating ring edge faces into the corner of the annular enlargement (17a) and bears against the face of the enlargement (17a) but terminates at the smallest possible spacing in front of the radial inside peripheral surface of the enlargement (17a).

14. A measuring cable travel sensor according to one of the preceding claims characterised in that the cable drum (2) is held at a spacing relative to the V-shaped seal (25) by means of an annular contact ring (26) whose outside periphery is smaller than the outside periphery of the enlargement (17a).

15. A measuring cable travel sensor according to one of the preceding claims characterised in that the mounting cases (13, 14) are screwed together by way of two axially directed screws in mutually opposite corners while screwing of the electric housing (15) to the mounting case for example (14) adjoining it is effected by way of the screw means in the other two corners.

16. A measuring cable travel sensor according to one of the preceding claims characterised in that
- one of the connecting screws (38'b) extends between the electric housing (15) and the adjoining mounting case (14) in the interior of the electric housing (15) and at least over a part of its axial length is of a non-round external cross-section (40) and is embraced in that region by the forked end of a sheet metal fork (27) which is non-rotatably connected to the angle transducer (5) and which extends radially away from same, and
- the sheet metal fork (27) is in the form of a blade-like cutting edge at least at the edges which face inwardly into the opening of the fork at the forked end on to the non-round external cross-section (40) of the connecting screw (38'b).

17. A measuring cable travel sensor according to one of the preceding claims characterised in that
- the connecting screws (38'b) comprise at least a first screwthreaded bolt (38'b1) of non-round external cross-section (40) which is screwed with its coaxial screwthreaded extension portion into the mounting case (14) and into whose coaxial screwthreaded bore arranged on the opposite end is screwed a cap screw (38'b2) for holding the electric housing (15) to the screwthreaded bolt (38'b1), and
- in the mounted condition the external cross-section (40) of the connecting screw (38'b), which is embraced by the sheet metal fork (27), is turned to such an extent that it moves with its outside surfaces into the smallest possible spacing relative to the edges of the sheet metal fork (27) which are directed towards the external cross-section (40), without being clamped between them.

18. A method of assembling the mechanical part of a measuring cable travel sensor, in particular according to one of the preceding claims, wherein the measuring cable travel sensor includes the following:
- a measuring cable (1),
- a cable drum (2) for winding on the measuring cable (1),
- a flat spiral spring (3) which is arranged coaxially with the cable drum (2) non-rotatably on the same shaft (4),
- a rotary angle transducer (5) connected to the shaft (4), and
- a housing which surrounds the travel sensor and which is sealed except for the measuring cable entry, with at least one mechanical internal space (11) and at least one electrical internal space (12) which are separated and spaced axially in the longitudinal direction (10) of the shaft (4) so that the cable drum (2) and the flat spiral spring (3) are disposed in the mechanical internal space (11) and the rotary angle transducer (5) and the associated electronics are disposed in the electrical internal space (12), wherein
- the housing of the mechanical internal space (11) is formed by two shell-shaped mounting cases (13, 14) which are each in one piece,
- the flat spiral spring is disposed in the one mounting case (13) and the cable drum and the measuring cable entry are disposed in the other mounting case (14), and
- the mounting cases (13, 14) can be fitted one into the other in positively locking relationship and are thereby rotatable relative to each other about the longitudinal axis (10) of the flat spiral spring (3),
characterised in that
- firstly the flat spiral spring (3) which is connected to the shaft (4) is fitted into the one mounting case (13),
- then the shaft (4) is connected to the cable drum (2) and the other mounting case (14), and
- after the two mounting cases (13. 14) are brought together in the axial direction the flat spiral spring (3) is wound up by turning the two mounting cases (13, 14) about the longitudinal axis of the shaft (4), and
- lastly the mounting cases (13, 14) are fixed relative to each other.

19. A method according to claim 18 characterised in that when the cable drum (2) is being connected to the other mounting case (14) a cable guide fitment (9) is fitted in the mounting case (14).

## Revendications

1. Capteur de position de câble de mesure comprenant
- un câble de mesure (1),
- un tambour à câble (2) pour l'enroulement du câble de mesure (1),
- un ressort hélicoïdal plat (3) disposé non rotatif sur le même arbre (4) et coaxial avec le tambour à câble (2),
- un indicateur d'angle de rotation (5) relié à l'arbre (4) et
- un boîtier étanche, entourant le capteur de position à l'exception de l'entrée du câble de mesure avec une chambre interne mécanique (11) et au moins une chambre interne électrique (12), séparées à distance axialement dans le sens longitudinal (10) de l'arbre (4) si bien que dans la chambre interne mécanique (11) sont logés le tambour à câble (2) et le ressort hélicoïdal plat (3) et dans la chambre interne électrique (12) l'indicateur d'angle de rotation (5) et l'électronique correspondante,
caractérisé en ce que
a) le boîtier de la chambre interne mécanique (11) est formé par deux flasques (13, 14) en forme de coque d'une seule pièce,
b) le ressort hélicoïdal plat est logé dans un flasque (13) et le tambour à câble et l'entrée de câble de mesure sont logés dans l'autre flasque (14), et
c) les flasques (13, 14) sont emboîtables par concordance des formes l'un dans l'autre et sont ainsi rotatives l'un par rapport à l'autre autour de l'axe longitudinal (10) du ressort hélicoïdal plat (3), le ressort hélicoïdal plat (3) étant de ce fait tiré.

2. Capteur de position de câble de mesure selon la revendication 1,
caractérisé en ce que les flasques (13, 14) et/ou le boîtier électrique (15) sont réalisés en coupe transversale externe ovale, de préférence quadratique.

3. Capteur de position de câble de mesure selon l'une des revendications précédentes, caractérisé en ce que dans la flasque (13) respectivement (14) pour le ressort hélicoïdal plat (3) la périphérie de l'évidement (8) destiné au ressort hélicoïdal plat (3) est sensiblement plus grande que leur périphérie externe quand le câble de mesure (1) est complètement enroulé sur le tambour à câble (2) et le contour périphérique de l'évidement (8) présente dans une zone périphérique un élargissement radial (6") dirigé vers l'extérieur pour le logement de la broche de fixation (6) pour l'extrémité externe du ressort hélicoïdal plat (3).

4. Capteur de position de câble de mesure selon l'une des revendications précédentes, caractérisé en ce que des flasques (13, 14), la flasque (13) par exemple forme l'extrémité de face avant du capteur de position et à l'intérieur duquel dans une cavité (16) en forme de trou borgne est disposé le palier de l'arbre (4) et dans une ouverture de passage de l'autre flasque par exemple (14) est disposé l'autre palier de l'arbre (4) dans une autre ouverture de logement (17).

5. Capteur de position de câble de mesure selon l'une des revendications précédentes, caractérisé en ce que l'arbre (4) est agencé au moins dans ses zones d'extrémité en face avant comme un arbre creux et en ce qu'en particulier la paroi en résultant est traversée par une fente longitudinale (19).

6. Capteur de position de câble de mesure selon l'une des revendications précédentes, caractérisé en ce que le boîtier électrique (15) et au moins la flasque attenante des deux flasques (13, 14) présentent au moins une surface conductrice.

7. Capteur de position de câble de mesure selon l'une des revendications précédentes, caractérisé en ce que le boîtier électrique (15) et au moins et au moins le flasque attenant des deux (13, 14) présentent une épaisseur de paroi moyenne et dans le sens axial un chevauchement mutuel suffisant pour obtenir de ce fait une protection suffisante contre un rayonnement électromagnétique traversant.

8. Capteur de position de câble de mesure selon l'une des revendications précédentes, caractérisé en ce que la garniture de câble (9) peut être montée ou démontée dans la flasque porteuse (par exemple 14) sans séparation des flasques (13) et (14) respectivement du boîtier électrique (15).

9. Capteur de position de câble de mesure selon l'une des revendications précédentes, caractérisé en ce que le ressort hélicoïdal plat (3) est maintenu à distance de la surface de fond (23) de la flasque porteuse (13) ou (14) et par une légère saillie légèrement axiale du palier glissant radial de l'arbre (4) au-dessus de la surface de fond (23).

10. Capteur de position de câble de mesure selon l'une des revendications précédentes, caractérisé en ce que la périphérie externe de l'arbre (4) est cylindrique excepté la cavité de logement de l'anneau de tolérance (20) et le tambour à câble (2) ainsi que le ressort hélicoïdal plat (3) sont maintenus à distance axiale correcte l'un de l'autre par une rondelle d'écartement (24) intercalée.

11. Capteur de position de câble de mesure selon la revendication 10, caractérisé en ce que la rondelle d'écartement (24) présente sur la face avant tournée vers le tambour à câble (2) une surface d'application la plus faible possible.

12. Capteur de position de câble de mesure selon la revendication 10, caractérisé en ce que la rondelle d'écartement (24) est étanche sur sa périphérie externe vis-à-vis du boîtier enveloppant de la chambre interne mécanique (11).

13. Capteur de position de câble de mesure selon l'une des revendications précédentes, caractérisé en ce que l'étanchéité de la cambre interne mécanique (11) vis-à-vis de la chambre interne électrique (12) s'effectue au moyen d'une bague d'étanchéité (25) en V disposée dans un élargissement radial annulaire (17a) de l'ouverture de palier (17) sur la face de la chambre interne mécanique (11), bague dont le bord annulaire d'extrémité libre est tourné en direction du coin de l'élargissement annulaire (17a) et s'applique sur la surface frontale de l'élargissement (17a), en se terminant à une distance le plus faible possible devant la surface interne radiale de l'élargissement (17a).

14. Capteur de position de câble de mesure selon l'une des revendications précédentes, caractérisé en ce que le tambour à câble (2) est maintenu au moyen d'une rondelle d'accès annulaire (26) dont la périphérie externe est inférieure à la périphérie externe de l'élargissement (17a), à distance de la garniture d'étanchéité en V (25).

15. Capteur de position de câble de mesure selon l'une des revendications précédentes, caractérisé en ce que le vissage des flasques (13, 14) s'effectue aux coins opposés par l'intermédiaire de vis dirigées axialement, tandis que le vissage du boîtier électrique (15) à la flasque attenante par exemple (14) est assuré par le vissage aux deux autres coins.

16. Capteur de position de câble de mesure selon l'une des revendications précédentes, caractérisé en ce qu'
- l'une des vis de jonction (38'b) s'étend entre le boîtier électrique (15) et la flasque attenante (14) dans la chambre interne du boîtier électrique (15) et présente sur au moins une partie de sa longueur axiale une section ovale externe (40) et est entourée dans cette zone par l'extrémité en fourche d'une fourche en tôle (27) reliée à l'indicateur angulaire (5) et faisant saillie radialement de cette dernière et
- la fourche de tôle (27) présente un tranchant formant lame sur au moins les bords dirigés vers la section transversale ovale (4) de la vis de jonction (38'b) vers l'intérieur dans leur évidement sur l'extrémité formant fourche.

17. Capteur de position de câble de mesure selon l'une des revendications précédentes, caractérisé en ce que
- les vis de jonction (38'b) se composent d'au moins un premier boulon fileté (38'bl) de section externe ovale (40) qui est vissé par son embout fileté coaxial dans le flasque (14) et dans le perçage fileté coaxial, disposé sur la face avant opposé duquel est visée une vis à tête (38'b2) pour le maintien du boîtier électrique (15) sur le boulon fileté (38'b1) et
- à l'état monté la section transversale externe (40) de la vis de jonction (28'b) est entourée par la fourche de tôle (27) es tournée de manière à parvenir par ses surfaces externes à une distance la plus faible possible des bords dirigés vers la section externe (40) de la fourche de tôle (27) sans être tendue entre ces derniers.

18. Procédé de montage de la partie mécanique d'un capteur de position de câble de mesure, en particulier selon l'une des revendications précédentes, le capteur de position de câble de mesure comprenant :
un câble de mesure (1),
- un tambour à câble (2) pour l'enroulement du câble de mesure (1),
- un ressort hélicoïdal plat (3) disposé non rotatif sur le même arbre (4) et coaxial avec le tambour à câble (2),
- un indicateur d'angle de rotation (5) relié à l'arbre (4) et
un boîtier étanche, entourant le capteur de position à l'exception de l'entrée du câble de mesure avec une chambre interne mécanique (11) et au moins une chambre interne électrique (12), séparées à distance axialement dans le sens longitudinal (10) de l'arbre (4) si bien que dans la chambre interne mécanique (11) sont logés le tambour à câble (2) et le ressort hélicoïdal plat (3) et dans la chambre interne électrique (12) l'indicateur d'angle de rotation (5) et l'électronique correspondante,
- le boîtier de la chambre interne mécanique (11) étant formé par deux flasques (13, 14) en forme de coque d'une seule pièce,
- le ressort hélicoïdal plat étant logé dans une flasque (13) et le tambour à câble et l'entrée de câble de mesure étant logés dans l'autre flasque (14), et
- les flasques (13, 14) étant emboîtables par concordance des formes l'un dans l'autre et étant ainsi rotatives l'une par rapport à l'autre autour de l'axe longitudinal (10) du ressort hélicoïdal plat (3),
caractérisé en ce que
- tout d'abord le ressort hélicoïdal plat (3) relié à l'arbre (4) est introduit dans la flasque (13),
- puis l'arbre (4) est relié au tambour à câble (2) et à l'autre flasque (14), et
- après l'assemblage côte à côte des deux flasques (13, 14) en sens axial par rotation des deux flasques (13, 14) autour de l'axe longitudinal de l'arbre (4), le ressort hélicoïdal plat (3) est tiré et
- pour finir les flasques (13, 14) sont fixés l'un à l'autre.

19. Procédé selon la revendication 18,
caractérisé en ce que
à la jonction du tambour à câble (2) avec l'autre flasque (14), une garniture de câble (9) est montée dans la flasque (14).
